(19) Europäisches Patentamt
European Patent Office
Office européen des brevets

(11) EP 3 385 400 A1

(12) EUROPEAN PATENT APPLICATION
published in accordance with Art. 153(4) EPC

(43) Date of publication:
10.10.2018 Bulletin 2018/41

(51) Int Cl.:
C22C 38/00 (2006.01)    C22C 38/54 (2006.01)
F16B 35/00 (2006.01)    C21D 8/06 (2006.01)
C21D 9/00 (2006.01)

(21) Application number: 16870805.5

(22) Date of filing: 02.12.2016

(86) International application number:
PCT/JP2016/085854

(87) International publication number:
WO 2017/094870 (08.06.2017 Gazette 2017/23)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 04.12.2015   JP 2015237721
08.02.2016   JP 2016021984

(71) Applicant: Nippon Steel & Sumitomo Metal
Corporation
Tokyo 100-8071 (JP)

(72) Inventors:
• SANO, Naoyuki
  Tokyo 100-8071 (JP)
• MATSUI, Naoki
  Tokyo 100-8071 (JP)
• NEISHI, Yutaka
  Tokyo 100-8071 (JP)

(74) Representative: J A Kemp
14 South Square
Gray's Inn
London WC1R 5JJ (GB)

(54) ROLLING ROD FOR COLD-FORGED THERMALLY REFINED ARTICLE

(57) A rolled rod for cold-forged thermally refined articles is provided that has an excellent cold workability, and has a high strength and an excellent hydrogen embrittlement resistance when subjected to cold forging and thermal refining. The rolled rod for cold-forged thermally refined articles according to the present invention has a chemical composition consisting, in mass%: C: 0.22 to 0.40%, Si: 0.35 to 1.5%, Mn: 0.20 to 0.40%, P: less than 0.020%, S: less than 0.015%, Cr: 0.70 to 1.45%, Al: 0.005 to 0.060%, Ti: 0.01 to 0.05%, B: 0.0003 to 0.0040%, N: 0.0020 to 0.0080%, and O: 0.0020% or less, with the balance being Fe and impurities, and that satisfies Formula (1) and Formula (2), wherein a total area fraction of pro-eutectoid ferrite and pearlite is 90% or more, an area fraction of the pro-eutectoid ferrite is 30% or more, and the rolled rod has a tensile strength of 700 MPa or less.

$$0.50 \leq C + Si/10 + Mn/5 + 5Cr/22 \leq 0.85 \quad (1)$$

$$Si / Mn > 1.0 \quad (2)$$

EP 3 385 400 A1

FIG. 1

**Description**

TECHNICAL FIELD

The present invention relates to a rolled rod that is a steel bar or a wire rod as is hot-rolled (as-rolled member), more specifically to a rolled rod for cold-forged thermally refined articles, which refers to a component subjected to cold forging and thermal refining.

BACKGROUND ART

In recent years, components such as shafts, bolts, and the like used for components in various kinds of industrial equipment, automobiles and building structures are in some cases produced by cold forging from the viewpoint of dimensional accuracy, yield, and producing cost. While such cold-forged articles are often used as is cold-worked, they are strengthened by thermal refining (quenching and tempering) when it is desired to provide higher strengths. Among such cold-forged articles, those subjected to the thermal refining are referred to as cold-forged thermally refined articles in the present specification.

As a steel material to be subjected to thermal refining to provide a high strength, a low-alloyed steel for machine structural use is specified in JIS G4053(2008). The low-alloyed steel for machine structural use includes, for example, chrome steel, chrome-molybdenum steel, nickel-chrome-molybdenum steel, and the like. These steel materials contain a lot of Mo and Ni, which are expensive, to increase mainly hardenability and temper softening resistance.

Recent years have seen rises in prices of alloying elements such as Mo and Ni, and moreover a supply-and-demand environment is likely to fluctuate. Therefore, there is a demand of steel materials, which are excellent in mechanical properties such as fatigue property and hydrogen embrittlement resistance that are required in cold-forged articles, and in which these alloying elements are reduced or eliminated to suppress steel material costs.

Thus, steels containing boron (B), in place of alloying elements such as Mo and V, (B containing steels) are in widespread use. B increases hardenability of steel, as with the alloying elements such as Mo and V. However, when B containing steels are subjected to cold forging and thermal refining, so as to be used as cold-forged thermally refined articles (e.g., bolts) having tensile strengths of 1000 MPa or more, the B containing steels may have low hydrogen embrittlement resistances. Therefore, there is a demand for B containing steels excellent in hydrogen embrittlement resistance. Moreover, the B containing steels are also required to be excellent in cold workability since the B containing steels are made into components (bolts, etc.) through cold forging, as described above.

Such B containing steels excellent in fatigue strength, hydrogen embrittlement resistance, or cold workability, are proposed in Japanese Patent Application Publication No. 2012-162798 (Patent Literature 1), Japanese Patent Application Publication No. 9-104945 (Patent Literature 2), Japanese Patent Application Publication No. 2013-227602 (Patent Literature 3), and Japanese Patent Application Publication No. 2001-234277 (Patent Literature 4).

Patent Literature 1 proposes a steel for bolts that is excellent in delayed fracture resistance (hydrogen embrittlement resistance). The steel for bolts disclosed in this literature contains, C: 0.20 to less than 0.40%, Si: 0.20 to 1.50%, Mn: 0.30 to 2.0%, P: 0.03% or less, S: 0.03% or less, Ni: 0.05 to 1.0%, Cr: 0.01 to 1.50%, Cu: 1.0% or less, Al: 0.01 to 0.10%, Ti: 0.01 to 0.1%, B: 0.0003 to 0.0050%, and N: 0.002 to 0.010%, further contains one or more types selected from the group consisting of Cu, Ni, and Cr at 0.10 to 3.0% in total, with the balance being iron and unavoidable impurities, makes a ratio ([Si]/[C]) between a content of Si [Si] and a content of C [C] 1.0 or more, and is of a ferrite-pearlite structure.

Patent Literature 2 proposes a steel for bolts that is excellent in cold workability and delayed fracture resistance. The steel for bolts disclosed in this literature contains, C: 0.15 to 0.35%, Si: 0.1% or less, Mn: 0.3 to 1.3%, P: 0.01% or less, S: 0.01% or less, Cr: less than 0.5%, Ti: 0.01 to 0.10%, Al: 0.01 to 0.05%, B: 0.0005 to 0.003%, and the balance: Fe and unavoidable impurities, and satisfies the following formula of $0.50 \leq [C] + 0.15[Si] + 0.2[Mn] + 0.11[Cr] \leq 0.60$.

Patent Literature 3 discloses a machine structural steel for cold working that allows a sufficient softening to be implemented by performing spheroidizing annealing. The machine structural steel disclosed in this literature contains, C: 0.2 to 0.6%, Si: 0.01 to 0.5%, Mn: 0.2 to 1.5%, P: 0.03% or less, S: 0.001 to 0.05%, Al: 0.01 to 0.1%, N: 0.015% or less, and Cr: more than 0.5% and 2.0% or less, with the balance being iron and unavoidable impurities, wherein a steel micro-structure includes pearlite and pro-eutectoid ferrite, a summed area fraction of the pearlite and the pro-eutectoid ferrite with respect to the entire structure is 90% or more, an area fraction A of the pro-eutectoid ferrite has relations of Ae = (0.8 - Ceq) $\times$ 96.75 (note that Ceq = [C] + 0.1 $\times$ [Si] + 0.06 $\times$ [Mn] + 0.11 $\times$ [Cr]) and A > Ae, and an average grain diameter of ferrite in the pro-eutectoid ferrite and the pearlite is 15 to 25 $\mu$m.

Patent Literature 4 discloses a high-strength steel that is excellent in fatigue property. The high-strength steel disclosed in this Literature contains, C: 0.2 to 1.3%, Si: 0.01 to 3.0%, Mn: 0.2 to 3.0%, with the balance being Fe and unavoidable impurities, wherein a carbon equivalent Ceq (note that Ceq = [C] + [Si]/15 + [Mn]/10 + [Cr]/11 + [Mo]/7 + [V]/5 + [Ni]/45 + [Cu]/45) is 0.8% or more, and an amount of hydrogen emitted at a time of heating from a room temperature to 500°C is 0.3 ppm or less.

CITATION LIST

PATENT LITERATURE

Patent Literature 1: Japanese Patent Application Publication No. 2012-162798
Patent Literature 2: Japanese Patent Application Publication No. 9-104945
Patent Literature 3: Japanese Patent Application Publication No. 2013-227602
Patent Literature 4: Japanese Patent Application Publication No. 2001-234277

NON-PATENT LITERATURE

Non-Patent Literature 1: "Elements of Metallurgy and Engineering Alloys", ed. by F. C. Campbell, ASM International, Materials Park, 2008, pp 185-191.

SUMMARY OF INVENTION

TECHNICAL PROBLEM

As to the steel disclosed in Patent Literature 1, a content of Si is set to be more than a content of C, so that a delayed fracture resistance of the steel is improved while a strength of a matrix of the steel is ensured through solid-solution strengthening of Si. However, Ni, which is expensive, is supposed to be an essential element, which increases a steel material cost.

As to the steel disclosed in Patent Literature 2, lower limits and upper limits of the amounts of C, Si, Mn, and Cr are specified to specify a strength of a rolled material that allows a cold workability to be kept and a strength of the rolled material that allows a desired strength to be obtained after thermal refining. However, the steel may have a low hardenability and a low softening resistance after tempering because a content of Cr and a content of Si of the steel are low.

As to the steel disclosed in Patent Literature 3, an area fraction of a pro-eutectoid ferrite is estimated assuming that the steel is in an equilibrium state, and the area fraction is set at a predetermined value or more for improving a cold workability of the steel. However, an actual producing process is continuous cooling, and a cooling rate is changed in various ways depending on producing conditions. Therefore, the cold workability may not be obtained sufficiently in a real operation.

As to the steel disclosed in Patent Literature 4, a lower limit of a carbon equivalent Ceq is specified, and a content of hydrogen that is contained in the steel and emitted at a time of heating a steel material from a room temperature to 500°C is set at 0.3 ppm or less. By this setting, improvement in a fatigue property of the steel is intended. However, there is no disclosure about a method for ensuring a cold workability of the steel, and there is no disclosure about a hydrogen embrittlement resistance of a cold-forged thermally refined article, either.

An objective of the present invention is to provide a rolled rod for cold-forged thermally refined articles that has an excellent cold workability, and has a high strength and an excellent hydrogen embrittlement resistance when subjected to cold forging and thermal refining.

SOLUTION TO PROBLEM

A rolled rod for cold-forged thermally refined articles according to the present invention has a chemical composition consisting of, in mass%: C: 0.22 to 0.40%, Si: 0.35 to 1.5%, Mn: 0.20 to 0.40%, P: less than 0.020%, S: less than 0.015%, Cr: 0.70 to 1.45%, Al: 0.005 to 0.060%, Ti: 0.01 to 0.05%, B: 0.0003 to 0.0040%, N: 0.0020 to 0.0080%, O: 0.0020% or less, Cu: 0 to 0.50%, Ni: 0 to 0.30%, Mo: 0 to 0.05%, V: 0 to 0.05%, and, Nb: 0 to 0.05% with the balance being Fe and impurities, and that satisfies Formula (1) and Formula (2). In a matrix structure of the rolled rod, a total area fraction of pro-eutectoid ferrite and pearlite is 90% or more, and an area fraction of the pro-eutectoid ferrite is 30% or more. The rolled rod for cold-forged thermally refined articles according to the present invention has a tensile strength of 700 MPa or less.

$$0.50 \leq C + Si/10 + Mn/5 + 5Cr/22 \leq 0.85 \quad (1)$$

$$Si / Mn > 1.0 \qquad (2)$$

Here, a content (mass%) of a corresponding element is substituted for each symbol of an element in the formulae.

A rolled rod for cold-forged thermally refined articles according to the present invention has an excellent cold workability and has a high strength and an excellent hydrogen embrittlement resistance when subjected to cold forging and thermal refining.

BRIEF DESCRIPTION OF DRAWINGS

[FIG. 1] FIG. 1 is a side view of a test piece used in the Ono type rotating bending fatigue test in Examples.
[FIG. 2] FIG. 2 is a side view of an annular V-notch test piece used in a hydrogen embrittlement resistance evaluation test in Examples.

DESCRIPTION OF EMBODIMENTS

To solve the above problems, the present inventors conducted various studies. Consequently, the present inventors obtained the following findings.

(A) In order to ensure a hardenability while keeping a cold workability, and to suppress a steel material cost, a chrome steel (represented by a symbol "SCr" specified in JIS G4053 (2008)) is preferably used as a base. However, a defined composition of a low-alloyed steel for machine structural use defined in the above JIS Standard results in a low hydrogen embrittlement resistance.

(B) In order to increase a hydrogen embrittlement resistance of a cold-forged thermally refined article, it is effective to increase a tempering temperature in a producing process. However, increasing the tempering temperature causes temper-softening. In order to increase a temper softening resistance, it is effective to make a content of Si more than that in the defined composition of the above low-alloyed steel for machine structural use. Mn in a steel furthers grain-boundary segregation of P, promoting a grain boundary fracture. Therefore, it is effective to make a content of Mn lower than that in the defined composition of the above low-alloyed steel for machine structural use.

(C) Sufficient hardenability is required to provide the cold-forged thermally refined article with a high tensile strength of 1000 to 1300 MPa, and to obtain a high fatigue strength. However, if the hardenability is too high, the cold workability of a rolled rod that is to be a starting material of the cold-forged thermally refined article will decrease. In this case, before carrying out the rolled rod drawing and cold working such as and cold forging, a softening heat treatment must be performed for an extended time period in multiple times for the purpose of softening the rolled rod. Consequently, even if alloying elements such as Mo and V are not contained in a large amount, the production cost increases. Therefore, a rolled rod that enables cold working even without being subjected to the long-time softening heat treatment a plurality of times, and that has hardenability, with which the aforementioned high strength and high fatigue strength are obtained, is desirable.

Therefore, it is desirable to have a rolled rod that has a hardenability that allows cold working and provides the above high strength and high fatigue strength without being subjected to the long-time softening heat treatment a plurality of times.

Thus, in order to keep the cold workability while ensuring the hardenability, the rolled rod according to the present invention satisfies Formula (1).

$$0.50 \le C + Si/10 + Mn/5 + 5Cr/22 \le 0.85 \quad (1)$$

where, a content (mass%) of a corresponding element is substituted for each symbol of an element in Formula (1).

Herein, fn1 is defined as equal to C + Si/10 + Mn/5 + 5Cr/22. C, Si, Mn and Cr are each elements that increase hardenability. Therefore, fn1 serves as an index of hardenability and cold workability.

If fn1 is too low, sufficient hardenability is not obtained. In this case, it is impossible to obtain the high tensile strength and the high fatigue strength in the cold-forged thermally refined article. On the other hand, if fn1 is too high, the hardenability of the rolled rod will be too high. In this case, when finish rolling is performed on a billet to produce the rolled rod, bainite is formed in the steel, which increases a strength and a hardness of the steel, decreasing the cold workability. Therefore, sufficient cold workability is not obtained unless a softening heat treatment for an extended time period is carried out multiple times prior to a wire drawing process and a cold forging process that are subsequent processes.

If fn1 satisfies Formula (1), while obtaining excellent hardenability and fatigue strength, sufficient cold workability is obtained even if a softening heat treatment is not performed multiple times for an extended time period.

(D) In order to increase a fatigue strength and a hydrogen embrittlement resistance of a cold-forged thermally refined article, it is effective to reduce inclusions in the steel or to refine the inclusions. In a case of a steel having a content of Cr of about 1%, when a ratio of a content of Si to a content of Mn in the steel is more than one, that is, Formula (2) is satisfied, the inclusions are $MnO$-$SiO_2$, which is soft. These inclusions are vitrified, and elongated and fragmented during hot rolling and thereby refined. As a result, coarse inclusions, which decrease the fatigue strength, are reduced, which increases the fatigue strength and improve the hydrogen embrittlement resistance.

$$Si / Mn > 1.0 \qquad (2)$$

where, a content (mass%) of a corresponding element is substituted for each symbol of an element in Formula (2).

(E) In addition to the above, a cold workability of a rolled rod for cold-forged thermally refined articles depends on, as well as a matrix structure of a steel. When the matrix structure is mainly a mixed structure of pro-eutectoid ferrite and pearlite, and an area fraction of the pro-eutectoid ferrite is large, the rolled rod is excellent in cold workability. Specifically, in a matrix structure inside the rolled rod for cold-forged thermally refined articles, when a total area fraction of the pro-eutectoid ferrite and the pearlite is 90% or more of the entire matrix structure, and the area fraction of the pro-eutectoid ferrite is 30% or more, the cold workability increases.

A rolled rod for cold-forged thermally refined articles according to the present invention completed based on the above findings has a chemical composition consisting, in mass%: C: 0.22 to 0.40%, Si: 0.35 to 1.5%, Mn: 0.20 to 0.40%, P: less than 0.020%, S: less than 0.015%, Cr: 0.70 to 1.45%, Al: 0.005 to 0.060%, Ti: 0.01 to 0.05%, B: 0.0003 to 0.0040%, N: 0.0020 to 0.0080%, O: 0.0020% or less, Cu: 0 to 0.50%, Ni: 0 to 0.30%, Mo: 0 to 0.05%, V: 0 to 0.05%, and, Nb: 0 to 0.05% with the balance being Fe and impurities, and that satisfies Formula (1) and Formula (2). In a matrix structure of the rolled rod, a total area fraction of pro-eutectoid ferrite and pearlite is 90% or more, and an area fraction of the pro-eutectoid ferrite is 30% or more. The rolled rod for cold-forged thermally refined articles according to the present invention has a tensile strength of 700 MPa or less.

$$0.50 \leq C + Si/10 + Mn/5 + 5Cr/22 \leq 0.85 \quad (1)$$

$$Si / Mn > 1.0 \qquad (2)$$

where a content (mass%) of a corresponding element is substituted for each symbol of an element in Formula (1) and Formula (2)..

Here, the cold-forged thermally refined articles mean components that are subjected to cold forging and subjected to thermal refining (quenching and tempering). In addition, the rolled rod means a steel bar or a wire rod as is hot rolled (what is referred to as an as-rolled member).

The above chemical composition may contain one or more types selected from a group consisting of Cu: 0.02 to 0.50%, Ni: 0.01 to 0.30%, Mo: 0.005 to 0.05%, and V: 0.005 to 0.05%. In addition, the above chemical composition may contain Nb: 0.0015 to 0.05%.

A method for producing the above-described rolled rod for cold-forged thermally refined articles includes a billeting process and a finish rolling process. In the billeting process, a starting material having the above-described chemical composition is heated to a temperature of 1200°C or more and thereafter subjected to billeting to produce a billet. In the finish rolling process, the billet is heated to a temperature of 1050°C or less and thereafter subjected to finish rolling to produce the rolled rod. The finish rolling process includes: a process of subjecting the billet to the finish rolling to produce the rolled rod at a working rate Z defined by Formula (3) set at 5 to 15 /sec within a range of a temperature of the billet of 750 to 850°C; and a process of cooling the rolled rod, immediately after completion of the rolling, at a cooling rate of 0.2 to 5.0°C/sec down to 500°C.

$$Z = -\ln(1 - R) / t \qquad (3)$$

Here, "R" in Formula (3) denotes a reduction of area (%) of the finish rolling and is defined by Formula (4), and "t" denotes a finish rolling duration (sec).

$$R = (A_0 - A) / A_0 \qquad (4)$$

"$A_0$" in Formula (4) denotes a cross-sectional area ($mm^2$) of the billet before the finish rolling, and "A" denotes a cross-sectional area ($mm^2$) of the rolled rod after the finish rolling.

Hereunder, the rolled rod for cold-forged thermally refined articles according to the present invention will be described in further detail. The symbol "%" in relation to an element means "mass%" unless specifically stated otherwise.

[Chemical Composition]

The rolled rod for cold-forged thermally refined articles according to the present invention contains the following elements as a chemical composition rolled rod for cold-forged thermally refined articles.

C: 0.22 to 0.40%

Carbon (C) increases strength of a steel. If the C content is less than 0.22%, the aforementioned effects is not obtained. On the other hand, if the C content is more than 0.40%, cold workability of a steel material will decrease. Consequently, the content of C is 0.22 to 0.40%. In order to further increase the hardenability, a preferable lower limit of the content of C is 0.26%. A lower limit of the content of C is preferably 0.24%, more preferably 0.26%. In order to further increase the cold workability, an upper limit of the content of C is preferably 0.35%.

Si: 0.35 to 1.5%

Silicon (Si) deoxidizes steel. In addition, Si strengthens a steel material by being dissolved in ferrite. In addition, Si inhibits precipitation of cementite and increases a temper softening resistance of a steel material.

Moreover, Si has the following effect. A fusing point of $MnO\text{-}SiO_2$ in deoxidation product is about 1250°C, which is low. Therefore, $MnO\text{-}SiO_2$ is in a liquid state in a molten steel before solidification and is vitrified to become soft inclusions through the solidification. $MnO\text{-}SiO_2$ is elongated and fragmented to be refined during the hot rolling. As a result, coarse inclusions, which ruin the fatigue strength and the hydrogen embrittlement resistance, are reduced, which increases the fatigue strength and the hydrogen embrittlement resistance.

In order to form proper $MnO\text{-}SiO_2$ and to increase the temper softening resistance after the thermal refining, contents of Si (0.15 to 0.35%) specified for chrome steels described in the JIS Standard are insufficient. Specifically, a content of Si less than 0.35% results in failure to obtain the above effect. On the other hand, a content of Si more than 1.5% makes a strength of a steel material excessively high, resulting in a decrease in the cold workability. Therefore, the content of Si is 0.35 to 1.5%. A lower limit of the content of Si is preferably is 0.36%, more preferably 0.38%. In order to further increase the cold workability, an upper limit of the content of Si is preferably less than 1.0%.

Mn: 0.20 to 0.40%

Manganese (Mn) increases a hardenability and a toughness of a steel material. A content of Mn less than 0.20% results in failure to obtain this effect. On the other hand, an excessively high content of Mn may cause Mn to segregate in grain boundaries at a time of performing the thermal refining, furthering grain boundary fracture. In addition, the excessively high content of Mn makes it difficult to obtain proper $MnO\text{-}SiO_2$. As a result, the hydrogen embrittlement resistance is decreased. At contents of Mn (0.60 to 0.85%) specified for chrome steels described in the JIS Standard, it is difficult to inhibit the grain boundary fracture due to the segregation, and it is difficult to obtain the proper $MnO\text{-}SiO_2$. Consequently, the content of Mn is 0.20 to 0.40%. A lower limit of the content of Mn is preferably 0.22%, and an upper limit of the content of Mn is preferably 0.35%.

P: less than 0.020%

Phosphorus (P) is an impurity. P is likely to segregate in austenite grain boundaries, so as to cause quenching cracking or grain boundary fracture after the thermal refining. Consequently, the content of P is less than 0.020%. An upper limit of the content of P is preferably less than 0.010%. The content of P is preferably as low as possible.

S: less than 0.015%

Sulfur (S) is an impurity. S forms sulfides, so as to decrease the cold workability. Consequently, the content of S is less than 0.015%. The content of S is preferably as low as possible.

Cr: 0.70 to 1.45%

Chromium (Cr) increases a hardenability of a steel material. A content of Cr less than 0.70% results in failure to obtain this effect. On the other hand, a content of Cr more than 1.45% makes the hardenability excessively high, resulting in generation of bainite during the cooling after the hot rolling. In this case, the strength of steel is made excessively high, resulting in a decrease in the cold workability of the rolled rod. Consequently, the content of Cr is 0.70 to 1.45%. A lower limit of the content of Cr is preferably 0.90%, and an upper limit of the content of Cr is preferably 1.20%.

Al: 0.005 to 0.060%

Aluminum (Al) deoxidizes steel. In addition, Al is bonded to N to form AlN, immobilizing N. In addition, Al inhibits austenite grains from coarsening in heating by a pinning effect of AlN particles. A content of Al less than 0.005% results in failure to obtain these effects. On the other hand, a content of Al more than 0.060% causes excessive generation of $Al_2O_3$, resulting in a decrease in the cold workability. Consequently, the content of Al is 0.005 to 0.060%. In order to increase the cold workability, an upper limit of the content of Al is 0.060%, more preferably 0.050%, still more preferably 0.045%. In the chemical composition of the rolled rod for cold-forged thermally refined articles according to the present invention, the content of Al means the total amount of Al contained in a steel.

Ti: 0.01 to 0.05%

Titanium (Ti) is bonded to N to form TiN, immobilizing N. In addition, Ti inhibits austenite grains from coarsening in heating by a pinning effect of TiN particles. A content of Ti less than 0.01% results in failure to obtain these effects. On the other hand, a content of Ti more than 0.05% causes a lot of Ti(C, N) to precipitate, resulting in an excessively high strength of a steel material. In this case, a cold workability of steel is decreased. Consequently, the content of Ti is 0.01 to 0.05%. A preferable lower limit of the content of Ti is 0.05%. An upper limit of the content of Ti is preferably 0.045%.

B: 0.0003 to 0.0040%

Boron (B) increases a hardenability of steel. In addition, B inhibits grain-boundary segregation of P, increasing a hydrogen embrittlement resistance of a steel. A content of B less than 0.0003% results in failure to obtain these effects. On the other hand, a content of B more than 0.0040% makes an effect of improving the hardenability saturated. In addition, the content of B more than 0.0040% causes coarse BN to be formed, resulting in decreases in the cold workability and the toughness. Consequently, the content of B is 0.0003 to 0.0040%. When B is bonded to dissolved N to form BN, an amount of dissolved B is reduced, and thus the hardenability is decreased. In order to ensure a sufficient amount of dissolved B to further increase the hardenability, a lower limit of the content of B is preferably 0.0005%, more preferably 0.0010%. In order to further inhibit the decreases in the cold workability and the toughness, an upper limit of the content of B is preferably 0.0030%, more preferably 0.0025%.

N: 0.0020 to 0.0080%

Nitrogen (N) is bonded to Al and Ti in steel to form nitrides inhibiting austenite grains from coarsening in heating. A content of N less than 0.0020% results in failure to obtain this effect. On the other hand, a content of N more than 0.0080% causes excessive generation of BN, resulting in a decrease in an amount of dissolved B. In this case, a hardenability of steel is decreased. Consequently, the content of N is 0.0020 to 0.0080%. A lower limit of the content of N is preferably 0.0022%. In order to further increase the hardenability, an upper limit of the content of N is preferably less than 0.0070%, more preferably 0.0060%.

O: 0.0020% or less

Oxygen (O) is an impurity. O forms oxides, so as to decrease the cold workability. A content of O more than 0.0020% causes the oxides to be formed in a large amount and causes MnS to coarsen, resulting in a remarkable decrease in the cold workability. Consequently, the content of O is 0.0020% or less. An upper limit of the content of O is preferably 0.0018%. The content of O is preferably as low as possible.

The balance of the chemical composition of the rolled rod for cold-forged thermally refined articles according to the present invention is Fe and impurities. Here, the term "impurities" refers to elements which, during industrial production of the high-strength bolt, are mixed in from ore or scrap that is used as a raw material, or from the production environment or the like, and which are allowed within a range that does not adversely affect the present invention.

[Optional Elements]

The aforementioned rolled rod for cold-forged thermally refined articles may further contain one or more types selected from the group consisting of Cu, Ni, Mo and V as a substitute for a part of Fe. Each of these elements is an optional element, and each of these elements increases the hardenability of a steel.

Cu: 0 to 0.50%

Copper (Cu) is an optional element, and may not be contained in a steel. In a case where Cu is contained, the Cu increases the hardenability of a steel. However, if the Cu content is more than 0.50%, the hardenability will be too high, being likely to generate bainite. In this case, the cold workability will decrease. Accordingly, the Cu content is from 0 to 0.50%. A preferable lower limit of the Cu content for more effectively obtaining the aforementioned effect is 0.02%, and further preferably is 0.05%. In order to increase the cold workability, a preferable upper limit of the Cu content is 0.30%, and further preferably is 0.20%.

Ni: 0 to 0.30%

Nickel (Ni) is an optional element, and may not be contained in a steel. In a case where Ni is contained, Ni increases a hardenability of steel and moreover also increases a grain boundary strength of a steel. However, if the Ni content is more than 0.30%, these effects are saturated and it results in an increase in a steel material cost. Accordingly, the Ni content is from 0 to 0.30%. A preferable lower limit of the Ni content for more effectively obtaining the aforementioned effects is 0.03%, and further preferably is 0.05%. In order to increase the cold workability, a preferable upper limit of the Ni content is 0.20%, and further preferably is 0.10%.

Mo: 0 to 0.05%

Molybdenum (Mo) is an optional element, and may not be contained in a steel. In a case where Mo is contained, the Mo increases hardenability of a steel. However, if the Mo content is more than 0.05%, the hardenability will be too high, being likely to generate bainite and martensite. In this case, a cold workability of steel is decreased. Accordingly, the Mo content is from 0 to 0.05%. A preferable lower limit of the Mo content for more effectively obtaining the aforementioned effect is 0.005%. A preferable upper limit of the Mo content is 0.03%, and further preferably is 0.02%.

V: 0 to 0.05%

Vanadium (V) is an optional element, and may not be contained in a steel. In a case where V is contained, the V increases the hardenability of a steel. V also forms carbides, nitrides or carbo-nitrides and refines the grains, increasing a strength of steel. However, if the V content is more than 0.05%, the carbides or the like will coarsen and the cold workability will decrease. Accordingly, the V content is from 0 to 0.05%. A preferable lower limit of the V content for more effectively obtaining the aforementioned effects is 0.005%. In order to increase the cold workability, a preferable upper limit of the V content is 0.03%, and more preferably is 0.02%.

The chemical composition of the rolled rod for cold-forged thermally refined articles according to the present invention may further contain Nb as a substitute for a part of Fe.

Nb: 0 to 0.05%

Niobium (Nb) is an optional element and need not be contained. When contained, Nb is bonded to C and N to form carbides, nitrides, or carbo-nitrides, refining grains. Nb also enhances a hydrogen embrittlement resistance of a cold-forged thermally refined article that is produced from the rolled rod according to the present invention. However, if the Nb content is more than 0.050%, coarse carbides or the like are formed and the cold workability of the rolled rod decreases. Accordingly, the Nb content is from 0 to 0.050%. A preferable lower limit of the Nb content for more effectively obtaining the aforementioned effects is 0.0015%.

A preferable upper limit of the Nb content is 0.040%, and more preferably is 0.030%.

[Regarding Formula (1)]

The chemical composition of the high-strength bolt according to the present invention also satisfies Formula (1).

$$0.50 \le C + Si/10 + Mn/5 + 5Cr/22 \le 0.85 \quad (1)$$

The content (mass%) of a corresponding element is substituted for each symbol of an element in Formula (1).

fn1 = C + Si/10 + Mn/5 + 5Cr/22 is an index of the strength and cold workability of a steel material. fn1 indicates the carbon equivalent of steel material. If fn1 is too low, sufficient hardenability is not obtained, and a tensile strength and a fatigue strength cannot be obtained. On the other hand, if fn1 is too high, the hardenability will be too high. In this case, when the rolled rod is rolled, bainite and/or martensite is formed and the strength and hardness of steel will be too high. In this case, it is impossible to obtain a sufficient cold workability unless the long-time softening heat treatment is performed on the rolled rod a plurality of times before subsequent processes including a wire drawing process and a cold forging process are performed using the rolled rod. If fn1 is from 0.50 to 0.85, while obtaining excellent hardenability, sufficient cold workability is obtained even if a softening heat treatment is not performed for an extended time period. A preferable lower limit of fn1 is 0.55. A preferable upper limit of fn1 is 0.80.

[Regarding Formula (2)]

The chemical composition of the rolled rod for cold-forged thermally refined articles according to the present invention further satisfies Formula (2)

$$Si / Mn > 1.0 \quad (2)$$

where, the content (mass%) of a corresponding element is substituted for each symbol of an element in Formula (2).

It is defined that fn2 = Si/Mn. Si and Mn generate $MnO\text{-}SiO_2$ in the course of deoxidation. The fusing point of $MnO\text{-}SiO_2$ is around 1250°C. Consequently, although $MnO\text{-}SiO_2$ is a liquid in molten metal before solidification, $MnO\text{-}SiO_2$ becomes a solid in a billet after solidification, and becomes a vitrified soft inclusion. The inclusion is elongated and fragmented during hot rolling and thereby refined. Therefore, the fatigue strength increases and the hydrogen embrittlement resistance characteristics improve. In order to obtain refined $MnO\text{-}SiO_2$, it is necessary to appropriately control the proportion of Si with respect to Mn. The index for this is fn2.

With an increase in fn2, a fatigue strength and a hydrogen embrittlement resistance of a cold-forged thermally refined article that is produced from the rolled rod according to the present invention are increased. Then, when fn2 becomes more than 1.0, the hydrogen embrittlement resistance becomes remarkably excellent as compared with SCM435 of the JIS Standard. Consequently, as shown in Formula (2), fn2 satisfies fn2 > 1.0. A lower limit of fn2 is preferably 1.2.

[Matrix Structure and Tensile Strength]

A matrix structure of the rolled rod for cold-forged thermally refined articles according to the present invention is mainly made of pro-eutectoid ferrite and pearlite. "The matrix structure being mainly made of pro-eutectoid ferrite and pearlite" described herein means that a total area fraction of the pro-eutectoid ferrite and the pearlite is 90% or more in the matrix structure. The balance of the matrix structure of the rolled rod for cold-forged thermally refined articles according to the present invention is, for example, bainite and martensite. In addition, the rolled rod for cold-forged thermally refined articles according to the present invention has a tensile strength of 700 MPa or less.

Pro-eutectoid ferrite and pearlite are softer than bainite and are excellent in cold workability. In addition, pro-eutectoid ferrite is more excellent in cold workability than pearlite. When the total area fraction of the pro-eutectoid ferrite and the pearlite is less than 90%, or when a pro-eutectoid-ferrite area fraction is less than 30%, it is impossible to obtain a sufficient cold workability. When the total area fraction of the pro-eutectoid ferrite and the pearlite is 90% or more, or when an area fraction of the pro-eutectoid ferrite is 30% or more, it is possible to obtain an excellent cold workability.

The total area fraction of the pro-eutectoid ferrite and the pearlite is preferably 92% or more, more preferably 95% or more. A lower limit of the area fraction of the pro-eutectoid ferrite is preferably 35% or more, more preferably 40% or more.

With the above matrix structure and tensile strength, the rolled rod for cold-forged thermally refined articles according to the present invention has an excellent cold workability. Note that a lower limit of the tensile strength is, for example, but not particularly limited to, 500 MPa.

The matrix structure is measured by the following method. From an R/2 portion of the rolled rod (R is a distance from a central axis of the rod to an outer peripheral surface of the rod), a sample is taken. Among surfaces of the taken sample, a surface perpendicular to a rolling direction of the rolled rod is determined as an observation surface. The observation surface is polished and thereafter etched with 3% nitric acid and alcohol (Nital etching reagent). The etched observation surface is observed under an optical microscope with 500 magnification, and photographic images of any five visual fields on the etched observation surface are created.

In each of the visual fields, phases including pro-eutectoid ferrite, pearlite, bainite, martensite, and the like have their own different contrasts. Therefore, the phases are identified based on the respective contrasts. Of the identified phases, an area ($\mu$m$^2$) of pro-eutectoid ferrite and an area ($\mu$m$^2$) of pearlite are determined in each visual field. A ratio of a total sum of areas of pro-eutectoid ferrite and areas of pearlite over all the visual fields to a total area of all the visual fields is defined as a total area fraction (%) of the pro-eutectoid ferrite and the pearlite. Similarly, a ratio of a total sum of the areas of the pro-eutectoid ferrite over all the visual field to the total area of all the visual fields is defined as a pro-eutectoid ferrite area fraction (%).

[Preferable Outer Diameter of Rolled Rod]

Preferably, a diameter Dc of the rolled rod (critical diameter, in mm) satisfies Formula (A) below.

$$D_C = 4 \times (0.70Si + 1.0) \times (3.33Mn + 1.0) \times (2.16Cr + 1.0) \qquad (A)$$

where, the content (mass%) of a corresponding element is substituted for each symbol of an element.

Prediction of hardenability is described in Non-Patent Literature 1. Assume an example of steel materials conforming to the present invention. A round bar in which a content of C is 0.3%, and a grain size number of austenite grains is No.8 has a reference diameter $D_B$ of about 0.165 inch (about 4 mm). Here, the reference diameter $D_B$ means a critical diameter that can be obtained only from the content of C (a diameter that makes martensite account for 50% of a center portion of the round bar). With the reference diameter $D_B$, the critical diameter $D_C$ will be defined.

In consideration of an advantageous effect of improving the hardenability by the alloying elements (multiplying factor), the critical diameter $D_C$ is expressed as $D_C = D_B \times f(Si) \times f(Mn) \times f(Cr)$. Here, f(X) is a function of a content X of an alloying element X and referred to as a multiplying factor that is specific to each of the alloying elements. In the present invention, multiplying factors specific to the alloying element are defined as the following formulae using numeric values described in Non-Patent Literature 1.

$$f(Si) = 0.70Si + 1.0$$

$$f(Mn) = 3.33Mn + 1.0$$

$$f(Cr) = 2.16Cr + 1.0$$

Hence, in the present invention, a critical diameter $D_C$ of the rolled rod in which the hardenability is ensured is defined as Formula (A) below.

$$D_C = 4 \times (0.70Si + 1.0) \times (3.33Mn + 1.0) \times (2.16Cr + 1.0) \qquad (A)$$

When a diameter of the rolled rod is equal to or less than the critical diameter $D_C$, a more sufficient hardenability is obtained.

[Producing Method]

[Method for Producing Rolled Rod for Cold-forged Thermally Refined Articles]

Description will be made about an example of a method for producing a rolled rod for cold-forged thermally refined articles according to the present invention. The method for producing a rolled rod according to the present embodiment includes a process of producing a billet (billeting process) and a process of rolling the produced billet into a rod (finish rolling process). The processes will be described below in detail.

[Billeting Process]

First, a starting material having the above chemical composition is prepared. For example, the starting material is produced by the following method. Molten steel having the above chemical composition is produced using a converter, an electric furnace, or the like. Using the molten steel, a cast piece is produced through a continuous casting process. Alternatively, using the molten steel, an ingot is produced through an ingot-making process.

The prepared starting material (cast piece, or ingot) is heated and thereafter subjected to billeting using a billeting mill, and after the billeting, further subjected to rolling using a continuous mill, as necessary, so as to produce a billet. In the continuous mill, horizontal roll stands and vertical roll stands are arranged alternately in a line, and the starting material is rolled into the billet using grooves formed on rolling rolls in each of the stands.

A heating temperature of the starting material before the billeting is preferably 1200°C or more. When the heating temperature is 1200°C or more, coarse carbo-nitrides and carbides such as Ti(C, N) and TiC that are formed in solidification of the starting material are dissolved in the heating. Since the coarse carbo-nitrides are inhibited, the cold workability of the rolled rod is increased.

[Finish Rolling Process]

The billet produced through the billeting process is further subjected to hot rolling to produce a rolled rod for cold-forged thermally refined articles.

First, the billet is charged into a reheating furnace to be heated. A heating temperature of the heating is preferably 1050°C or less. When a heating temperature in product rolling is excessively high, fine carbides and carbo-nitrides having precipitated after the billeting process are dissolved again. In this case, carbides and carbo-nitrides coherently precipitate in ferrite transformation in cooling after finish rolling. The precipitating carbo-nitrides and carbides increase a strength of steel after the product rolling and decrease a cold workability of the steel. When the heating temperature is 1050°C or less, carbides and carbo-nitrides are inhibited from being excessively dissolved in the heating, and thus the cold workability can be further increased.

The heated billet is subjected to the finish rolling (hot rolling) into a rod having a predetermined diameter using a finish rolling mill line. The finish rolling mill line includes a plurality of stands arranged in a line. Each of the stands includes a plurality of rolls that are arranged around a pass line. The billet is rolled into the rolled rod using grooves formed on rolling rolls in each stand.

In the finish rolling using the finish rolling mill line, producing conditions are as follows.

Finishing temperature: 750 to 850°C

The finishing temperature means a surface temperature (°C) of the billet on a delivery side of a stand (hereafter, referred to as a finishing stand) that is a last to perform rolling the billet, of the plurality of stands in the finish rolling mill line. The finishing temperature is measured as the surface temperature of the billet using an infrared radiometer disposed on the delivery side of the finishing stand.

When the finishing temperature is less than 750°C, ferrite transformation starts with unrecrystallized austenite grains, which makes the matrix structure after cooling excessively fine. In this case, a tensile strength of the steel becomes more than 700 MPa, resulting in a decrease in the cold workability of the steel. On the other hand, when the finishing temperature is more than 850°C, recrystallized austenite grains are coarsened, which lowers a starting temperature of the ferrite transformation. As a result, the area fraction of pro-eutectoid ferrite after the cooling becomes small. In addition, a hard structure such as bainite may be produced. As a consequence, the tensile strength of the steel becomes more than 700 MPa, resulting in a decrease in the cold workability of the steel.

When the finishing temperature is 750 to 850°C, the matrix structure becomes made of pro-eutectoid ferrite and pearlite, under a condition that cooling conditions to be described later are satisfied. Specifically, the total area of the pro-eutectoid ferrite and the pearlite becomes 90% or more in the matrix structure.

Working rate Z: 5 to 15 /sec

The working rate Z (/sec) is defined by Formula (3).

$$Z = -\ln(1 - R) / t \qquad (3)$$

"R" in Formula (3) denotes a reduction of area (%) of the finish rolling by the finish rolling mill line and "t" denotes a finish rolling duration (sec).

The reduction of area R is defined by Formula (4).

$$R = (A_0 - A) / A_0 \qquad (4)$$

"$A_0$" in Formula (4) denotes a cross-sectional area ($mm^2$) of the billet before the finish rolling, and "A" denotes a cross-sectional area ($mm^2$) of the rod after the finish rolling.

The finish rolling duration t refers to a time period for which the billet passes through the finish rolling mill line, and the time period is a value (sec) that is obtained by dividing a distance (m) from a first stand (rolling mill) to a last stand (rolling mill), in the finish rolling mill line, by an average conveying speed (m/s) of the billet.

When the working rate Z is 5 to 15 /sec, the matrix structure after the cooling is less likely to be fine, which allows a tensile strength of the rod of 700 MPa or less. As a result, the cold workability is increased. When the working rate Z is less than 5 /sec, recrystallization occurs insufficiently, which makes austenite crystal grains coarse, resulting in an increase in the hardenability. As a result, the area fraction of pro-eutectoid ferrite is decreased, and the area fraction of bainite and martensitic structure, which are hard, is increased, which makes the tensile strength of the rolled rod more than 700 MPa. When the working rate Z is more than 15 /sec, austenite crystal grains are recrystallized to be refined, the hardenability is decreased, a pro-eutectoid ferrite area fraction is increased, which makes ferrite crystal grains excessively fine, with a result that the tensile strength of the rod becomes more than 700 MPa.

Cooling rate after the finish rolling down to 500°C: 0.2 to 5.0°C/sec

After the finish rolling, a cooling rate until a surface temperature of the rolled rod becomes 500°C is 0.2 to 5.0°C/sec. When the cooling rate is 0.2 to 5.0°C/sec, the total area of pro-eutectoid ferrite and pearlite in the matrix structure can be made 90% or more, and the area fraction of pro-eutectoid ferrite can be made 30% or more. When the cooling rate is more than 5.0°C/sec, hard bainite and the like are likely to be produced in steel, which makes the tensile strength of the rolled rod more than 700 MPa. A lower limit of the cooling rate is, for example, but not particularly limited to, 0.2°C/sec in consideration of an actual production operation.

Through the above producing process, the rolled rod for cold forging according to the present invention is produced. That is, the rolled rod for cold forging is what is referred to as an as-rolled member (as-rolled member). The rolled rod for cold forging is of a matrix structure made of pro-eutectoid ferrite and pearlite and has a tensile strength of 700 MPa or less. Therefore, the rolled rod for cold forging is excellent in the cold workability.

[Method for Producing Cold-forged Thermally Refined Article]

As an example of a method for producing a cold-forged thermally refined article using the above-described rolled rod, a method for producing a bolt will be described. This producing method includes a wire drawing process, a cold forging process, and a thermal refining process (quenching-tempering process). The processes will be described below.

[Wire Drawing Process]

First, the above-described rolled rod is subjected to wire drawing working to produce a steel wire. The wire drawing working may include only first wire drawing or may include a plurality of wire drawing working including such as second wire drawing and the like. In the wire drawing, a lubricating coating is formed on a surface of the rolled rod. The lubricating coating is, for example, phosphate coating and non-phosphorus-based lubricating coating.

[Cold Forging Process]

The steel wire subjected to the wire drawing is cut into a predetermined length, and a cut steel wire is subjected to cold forging to produce a cold-forged article (here, a bolt).

[Regarding Softening Heat Treatment]

In the conventional method for producing a cold-forged article, to soften a rod in which the strength is too high, a softening heat treatment is performed multiple times before wire drawing and before cold forging. However, with the rolled rod according to the present invention satisfies Formula (1) and is thus excellent in the cold workability. Therefore, the softening heat treatment can be eliminated or simplified.

[Thermal Refining Process (Quenching and Tempering Process)]

The cold-forged article is subjected to thermal refining (quenching and tempering) under well-known conditions to produce a cold-forged thermally refined article. Since the above-described rolled rod has a high hardenability, performing the thermal refining allows a cold-forged thermally refined article having a high strength to be obtained. Specifically, by adjusting a quenching temperature and a tempering temperature as appropriate, it is possible to produce a cold-forged thermally refined article having a tensile strength of 1000 to 1300 MPa.

The cold-forged thermally refined article produced through the above producing process has a high strength and has an excellent hydrogen embrittlement resistance.

[Example 1]

Molten steels having chemical compositions shown in Table 1 were produced.

[Table 1]

TABLE 1

| Steel | Chemical Composition (unit is mass percent; balance is Fe and impurities) | | | | | | | | | | | | | | | | fn1 | fn2 |
|---|---|---|---|---|---|---|---|---|---|---|---|---|---|---|---|---|---|---|
| | C | Si | Mn | P | S | Cr | Al | Ti | B | N | O | Cu | Ni | Mo | V | Nb | | |
| a | 0.31 | 0.42 | 0.33 | 0.009 | 0.010 | 1.06 | 0.036 | 0.021 | 0.0025 | 0.0044 | 0.0013 | - | - | - | - | - | 0.66 | 1.27 |
| b | 0.37 | 0.41 | 0.39 | 0.008 | 0.011 | 1.16 | 0.038 | 0.019 | 0.0019 | 0.0032 | 0.0012 | - | - | - | - | - | 0.75 | 1.05 |
| c | 0.26 | 0.65 | 0.25 | 0.006 | 0.009 | 1.05 | 0.040 | 0.024 | 0.0030 | 0.0039 | 0.0014 | - | - | - | - | - | 0.61 | 2.60 |
| d | 0.35 | 0.80 | 0.34 | 0.012 | 0.010 | 1.21 | 0.039 | 0.022 | 0.0027 | 0.0041 | 0.0013 | 0.02 | 0.04 | 0.04 | - | - | 0.77 | 2.35 |
| e | 0.31 | 0.65 | 0.24 | 0.011 | 0.005 | 1.21 | 0.031 | 0.020 | 0.0024 | 0.0041 | 0.0016 | 0.02 | 0.06 | 0.05 | 0.03 | - | 0.70 | 2.71 |
| f | 0.29 | 0.41 | 0.31 | 0.010 | 0.009 | 1.42 | 0.032 | 0.020 | 0.0024 | 0.0040 | 0.0015 | 0.02 | 0.03 | 0.02 | 0.01 | 0.03 | 0.72 | 1.32 |
| g | 0.33 | 0.65 | 0.55 | 0.011 | 0.009 | 0.92 | 0.028 | 0.026 | 0.0031 | 0.0040 | 0.0018 | - | - | - | - | - | 0.71 | 1.18 |
| h | 0.23 | 0.41 | 0.26 | 0.010 | 0.014 | 0.72 | 0.031 | 0.024 | 0.0023 | 0.0038 | 0.0014 | - | - | - | - | - | 0.49 | 1.58 |
| i | 0.39 | 1.25 | 0.39 | 0.010 | 0.005 | 1.26 | 0.032 | 0.021 | 0.0015 | 0.0040 | 0.0013 | - | - | - | - | - | 0.88 | 3.21 |
| j | 0.34 | 0.36 | 0.38 | 0.011 | 0.009 | 0.74 | 0.028 | 0.018 | 0.0022 | 0.0061 | 0.0015 | - | - | - | - | - | 0.62 | 0.95 |
| k | 0.29 | 0.35 | 0.40 | 0.010 | 0.003 | 0.75 | 0.032 | 0.022 | 0.0019 | 0.0040 | 0.0014 | - | - | 0.02 | - | - | 0.58 | 0.88 |
| l | 0.36 | 0.24 | 0.66 | 0.008 | 0.006 | 1.04 | 0.046 | 0.003 | - | 0.0060 | 0.0019 | 0.02 | 0.02 | 0.22 | - | - | 0.75 | 0.36 |

Referring to Table 1, as described above, steel I had a chemical composition corresponding to the chemical composition of SCM435 of JIS G4053 (2008).

Using the molten steels having respective steel grades, blooms were produced. The blooms were heated to 1250°C and thereafter subjected to the billeting to produce billets each having a cross section of 162 mm × 162 mm (the billeting process). The billets were heated to 1030 to 1050°C and subjected to the finish rolling to produce round bars each having a diameter of 20 mm (the finish rolling process). A finish rolling temperature was 750 to 780°C, and the working rate was 5 to 15 /sec. After the finish rolling, the cooling rate until a surface temperature becomes 500°C was 0.2 to 5.0°C/sec. Each of the round bars produced through the above producing process was subjected to the following evaluation test.

[Microstructure Observation Test]

The round bar of each test number was cut in a direction perpendicular to a rolling direction, and a sample was taken from a 2/R portion of a cut surface of the round bar (a center portion of a line segment connecting between a central axis and an outer peripheral surface of the round bar). The sample was embedded in resin in such a manner that the above cut surface is available as an observation surface, and the sample was subjected to mirror polish. Thereafter, microstructure observation was performed by the above-described method, so as to determine the total area fraction (%) of pro-eutectoid ferrite and pearlite, and the area fraction of the pro-eutectoid ferrite. Results of the determination are shown in Table 2. "F+P" shown in Table 2 means that the matrix structure is made of pro-eutectoid ferrite and pearlite, and the total area fraction of the pro-eutectoid ferrite and the pearlite is 90% or more. "F+B" means that the matrix structure is made of pro-eutectoid ferrite and bainite. "F+P+B" means that the matrix structure is made of pro-eutectoid ferrite, pearlite, and bainite.

[Table 2]

TABLE 2

| Test Number | Steel | fn1 | fn2 | Structure | F+P Total Area Fraction (%) | Pro-Eutectoid Ferrite Area Fraction (%) | TS (MPa) | Cold Workability | Thermal Refining | | Hardness After Tempering (HV) | Fatigue Strength (MPa) | HR= Hc/ Href | Remarks |
|---|---|---|---|---|---|---|---|---|---|---|---|---|---|---|
| | | | | | | | | | Quenching Temperature (°C) | Tempering Temperature (°C) | | | | |
| 1 | a | 0.66 | 1.27 | F+P | 100 | 40 | 620 | ○ | 880 | 530 | 380 | 580 | 1.38 | Inventive Example |
| 2 | b | 0.75 | 1.05 | F+P | 100 | 33 | 680 | ○ | 880 | 550 | 370 | 570 | 1.40 | Inventive Example |
| 3 | c | 0.61 | 2.60 | F+P | 100 | 42 | 605 | ○ | 900 | 520 | 380 | 570 | 1.44 | Inventive Example |
| 4 | d | 0.77 | 2.35 | F+P | 95 | 31 | 685 | ○ | 890 | 560 | 360 | 550 | 1.50 | Inventive Example |
| 5 | e | 0.70 | 2.71 | F+P | 100 | 33 | 650 | ○ | 880 | 560 | 370 | 580 | 1.54 | Inventive Example |
| 6 | f | 0.72 | 1.32 | F+P | 100 | 40 | 660 | ○ | 900 | 520 | 380 | 580 | 1.47 | Inventive Example |
| 7 | g | 0.71 | 1.18 | F+P | 100 | 34 | 650 | ○ | 900 | 520 | 380 | 570 | 0.95 | Comparative Example |
| 8 | h | 0.49 | 1.58 | F+P | 100 | 48 | 530 | ○ | 880 | 435 | 290 | 450 | - | Comparative Example |
| 9 | i | 0.88 | 3.21 | F+B | 60 | 15 | 940 | × | 900 | 550 | 390 | 590 | 1.35 | Comparative Example |
| 10 | j | 0.62 | 0.95 | F+P | 100 | 38 | 620 | ○ | 900 | 550 | 360 | 500 | 0.98 | Comparative Example |
| 11 | k | 0.58 | 0.88 | F+P | 100 | 44 | 605 | × | 900 | 530 | 330 | 460 | 0.95 | Comparative Example |
| 12 | l | 0.75 | 0.36 | F+P | 100 | 18 | 690 | × | 880 | 520 | 340 | 480 | 1.00 | Comparative Example |

[Tensile Test]

From a center position of the round bar of each test number, a 14A test piece specified in JIS Z2241 (2011) was taken. In the test piece, a lengthwise direction was a rolling direction of a wire rod, a diameter of a parallel portion was 6 mm, and a gage length was 30 mm. The taken test piece was subjected to a tensile test at a room temperature (25°C), and a tensile strength TS (MPa) was determined. Resultant tensile strengths TS are shown in Table 2. A sample having a tensile strength of 700 MPa or less is determined to have an excellent cold workability.

[Cold Workability Evaluation Test]

From a center position of the round bar of each test number, a cylindrical test piece was taken. The cylindrical test piece was 14 mm in diameter and 21 mm in length. A lengthwise direction of the cylindrical test piece was parallel to the lengthwise direction of the round bar.

The cylindrical test piece was subjected to compression test in the atmosphere, at a room temperature (25°C), and at a deformation rate of 2 mm/min ($10^{-3}$/sec in terms of strain rate). Compression was performed until a compressibility calculated from a change in a height direction reaches 60%, and the compression was thereafter unloaded. A surface of the cylindrical test piece after the test was observed by visual check using a loupe with 10 magnification and checked for presence/absence of a crack. When no crack was found, the cylindrical test piece was determined to have a high cold workability ("○" in Table 2). In contrast, when a crack was found, the cylindrical test piece was determined to have a low cold workability ("×" in Table 2).

[Vickers Hardness Test using Test Piece Subjected to Thermal Refining]

A test piece that simulated a cold-forged thermally refined article was fabricated, and a Vickers hardness of the test piece was determined. Specifically, from a round bar of each test number, the above-described cylindrical test piece was taken. The cylindrical test piece was heated to a quenching temperature (°C) shown in Table 2 for 1 hour and thereafter immersed in oil at 60°C to be quenched. The quenched cylindrical test piece was subjected to tempering at tempering temperatures (°C) shown in Table 2. A duration of retention at the tempering temperatures was set at 1 hour. After the tempering, the cylindrical test piece was subjected to allowing cooling. Through the above processes, the cylindrical test piece subjected to the thermal refining was fabricated.

The cylindrical test piece subjected to the thermal refining was cut in a direction perpendicular to an axis direction of the cylindrical test piece. At any five points in a 2/R portion on a cut surface of the cylindrical test piece, the Vickers hardness test conforming to JIS Z2244 (2011) was conducted. A test force was 4.9 N. An average value of numeric values obtained at the five points was defined as a Vickers hardness (HV) of the test number. When the cylindrical test piece has a Vickers hardness of 320 HV or more, the cylindrical test piece was determined to exert a high strength after thermal refining.

[Fatigue Strength Test]

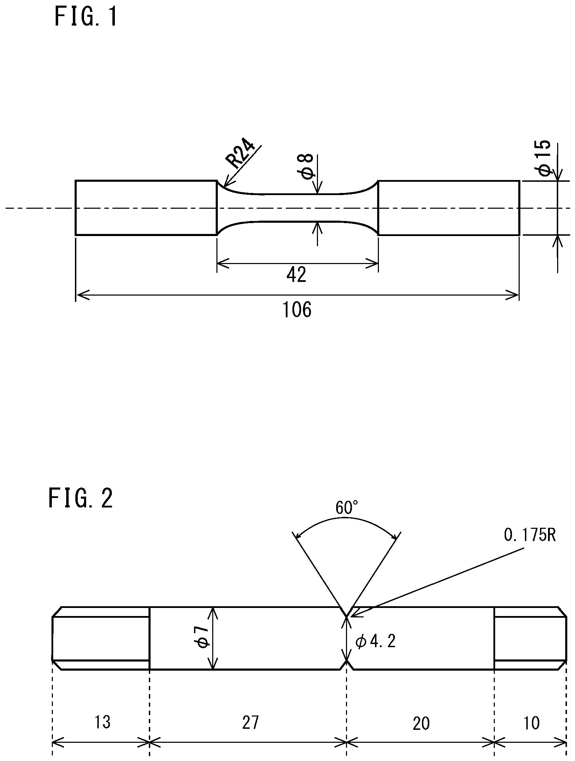

Using a test piece that simulated a cold-forged thermally refined article, a fatigue test was conducted. A round bar of each test number was subjected to the thermal refining (quenching and tempering), so as to adjust a Vickers hardness of a surface of the round bar to 360 to 370 HV. From the round bar after the thermal refining, a fatigue test piece illustrated in FIG. 1 was fabricated. Numeric values in FIG. 1 indicate dimensions (mm) of corresponding portions. In FIG. 1, "R24" indicates that a curvature radius of a corresponding curved portion is 24 mm, and "φ8" indicates that a diameter is 8 mm. A central axis of the fatigue test piece was coaxial with a central axis of the round bar.

The above-described fatigue test piece was subjected to the Ono type rotating bending fatigue test conforming to JIS Z2274 (1978) at a room temperature and in an air atmosphere. A rotational speed was set at 3400 rpm, a maximum stress at which the fatigue test piece was not ruptured after $10^7$ cycles of repetitions of stress loading was determined as a fatigue strength σw (MPa). The fatigue test piece having a fatigue strength σw of 550 MPa or more was determined to be excellent in the fatigue strength.

[Hydrogen Embrittlement Resistance Evaluation Test]

Using a test piece that simulated a cold-forged thermally refined article, a hydrogen embrittlement resistance evaluation test was conducted. A round bar of each test number was subjected to the thermal refining (quenching and tempering), so as to adjust a Vickers hardness of a surface of the round bar to 360 to 370 HV. Note that a test piece that fails to obtain a surface hardness 320 HV or more at a tempering temperature of 435°C was determined to have an insufficient strength, was not subjected to the hydrogen embrittlement resistance evaluation, and determined to fall outside the scope of the present invention.

From the round bar after the thermal refining, a plurality of annular V-notch test pieces illustrated in FIG. 2 were fabricated per each test number. Numeric values in FIG. 2 not accompanied by units indicate dimensions (in mm) of corresponding regions of a test piece. In the wire drawing, "φ numeric values" indicate diameters (mm) of specified regions. In FIG. 2, "60°" indicates that an angle of a V notch is 60°. In FIG. 2, "0.175R" indicates that a root radius of the V notch is 0.175 mm.

Employing the electrolytic charging method, hydrogen was introduced to a test piece at various concentrations, for each of the steel grades. The electrolytic charging method was performed as follows. The test piece was immersed in an ammonium thiocyanate aqueous solution. An anode potential was generated on a surface of the test piece being immersed, so that hydrogen was brought into the test piece.

After the hydrogen was introduced into the test piece, a zinc plating coating was formed on the surface of the test piece, so as to prevent the hydrogen in the test piece from being dispersed. Subsequently, a constant load test was conducted in which a constant load is posed on the test piece in such a manner that to a tensile stress being a nominal stress 1080 MPa is posed on a V-notch cross section of the test piece. The programmed temperature gas chromatography using a gas chromatography device was performed on test pieces that were ruptured during the test and test piece that were not ruptured during the test, so as to measure hydrogen amounts in the test pieces. After the measurement, a maximum hydrogen amount of the test pieces that were not ruptured was defined as a critical diffusible hydrogen amount Hc for each test number.

In addition, a critical diffused hydrogen amount of the steel 1 having the chemical composition equivalent to that of SCM435 defined in JIS G4053 (2008) was determined as a reference (Href) of a critical diffusible hydrogen amount ratio HR. With reference to the critical diffusible hydrogen amount Href, the critical diffusible hydrogen amount ratio HR was determined using Formula (B).

$$HR = Hc \,/\, Href \qquad (B)$$

A test piece having HR more than 1.00 was determined to be excellent in hydrogen embrittlement resistance.

[Test Result]

Table 2 shows test results.

As to each of test numbers 1 to 6, a chemical composition of the rolled rod were appropriate, fn1 satisfied Formula (1), and fn2 satisfied Formula (2). In addition, the producing conditions were appropriate. Therefore, in a matrix structure, the total area fraction of pro-eutectoid ferrite and pearlite was 90% or more, and the area fraction of the pro-eutectoid ferrite was 30% or more. The tensile strength was 700 MPa or less. Consequently, the rolled rods of the test numbers 1 to 6 had excellent cold rolling workabilities.

In addition, as to thermal-refined test pieces of these rolled rods that simulated cold-forged thermally refined articles, Vickers hardness after the tempering were all 320 HV or more, which were equivalent to tensile strengths of 1000 MPa or more. Moreover, fatigue strengths were 550 MPa or more, and HRs were more than 1.00, exerting excellent fatigue strengths and hydrogen embrittlement resistances.

On the other hand, as to a test number 7, the content of Mn was excessively high. Therefore, HR was 1.00 or less, meaning a low hydrogen embrittlement resistance.

As to a test number 8, fn1 was less than a lower limit of Formula (1). Therefore, the Vickers hardness was less than 320 HV even when the tempering was performed at a tempering temperature of 435°C. Consequently, the fatigue strength was less than 550 MPa.

As to a test number 9, fn1 was more than an upper limit of Formula (1). Therefore, the matrix structure was made of ferrite and bainite, and the tensile strength of the rolled rod was more than 900 MPa. Consequently, the cold workability of the rolled rod was low.

As to each of test numbers 10 and 11, fn2 did not satisfy Formula (2). Consequently, the fatigue strength was less than 550 MPa. In addition, HR was 1.00 or less, meaning a low hydrogen embrittlement resistance.

[Example 2]

[Test Method]

A plurality of blooms of a steel a and a steel grade d were produced. The blooms were heated to at heating temperatures T1(°C) shown in Table 3 and thereafter subjected to the billeting to produce billets each having a cross section of 162 mm × 162 mm. The billets were produced into round bars each having a diameter of 20 mm under producing conditions (heating temperature T2, finishing temperature T3, working rate Z, and cooling rate) shown in Table 3.

[Table 3]

TABLE 3

| Test Number | Steel | Heating Temperature T1 (°C) | Heating Temperature T2 (°C) | Finishing Temperature T3 (°C) | Working Rate Z (/sec) | Cooling Rate (°C/min) | Structure | F+P Total Area Fraction (%) | Pro- Eutectoid ferrite Area Fraction (%) | TS (MPa) | Cold Workability | Remarks |
|---|---|---|---|---|---|---|---|---|---|---|---|---|
| 13 | a | 1250 | 1020 | 795 | 6.8 | 0.5 | F+P | 100 | 38 | 650 | ○ | Inventive Example |
| 14 | a | 1050 | 1020 | 792 | 6.8 | 0.5 | F+P | 100 | 38 | 645 | × | Comparative Example |
| 15 | a | 1250 | 1100 | 790 | 6.8 | 0.5 | F+P | 100 | 36 | 705 | × | Comparative Example |
| 16 | a | 1250 | 1020 | 789 | 3.4 | 0.5 | F+P | 100 | 25 | 705 | × | Comparative Example |
| 17 | a | 1250 | 1020 | 900 | 6.8 | 0.5 | F+P | 100 | 24 | 715 | × | Comparative Example |
| 18 | a | 1250 | 1020 | 796 | 6.8 | 8 | F+P+B | 65 | 15 | 745 | × | Comparative Example |
| 19 | d | 1250 | 1010 | 800 | 6.8 | 0.5 | F+P | 95 | 31 | 680 | ○ | Inventive Example |
| 20 | d | 1040 | 1020 | 790 | 6.8 | 0.5 | F+P | 95 | 30 | 675 | × | Comparative Example |
| 21 | d | 1250 | 1150 | 795 | 6.8 | 0.5 | F+P | 95 | 30 | 715 | × | Comparative Example |
| 22 | d | 1250 | 1000 | 800 | 3.5 | 0.5 | F+P | 90 | 25 | 710 | × | Comparative Example |
| 23 | d | 1250 | 1020 | 920 | 6.8 | 0.5 | F+P | 90 | 25 | 720 | × | Comparative Example |
| 24 | d | 1250 | 1010 | 795 | 6.8 | 7 | F+P+B | 40 | 15 | 765 | × | Comparative Example |

EP 3 385 400 A1

Each of the produced round bar was subjected to the microstructure observation test, the tension test, and the cold workability evaluation test, by the same methods as in Example 1.

[Evaluation Results]

Table 3 shows results. As to each of a test number 13 and a test number 19, the producing conditions (heating temperature T1, heating temperature T2, finishing temperature T3, working rate Z, and cooling rate) of the billeting process and the finish rolling process were all appropriate. Therefore, in the matrix structure, the total area fraction of pro-eutectoid ferrite and pearlite was 90% or more, and the area fraction of the pro-eutectoid ferrite was 30% or more. The tensile strength TS was 700 MPa or less. Consequently, the test number 13 and the test number 19 were excellent in the cold workability.

On the other hand, as to each of a test number 14 and a test number 20, the heating temperature T1 in the billeting was excessively low. Consequently, the cold workability was low. It is considered that the excessively low heating temperatures T1 cause coarse inclusions not to be dissolved completely.

As to each of a test number 15 and a test number 21, the heating temperature T2 was excessively high. As a result, the tensile strength was more than 700 MPa, and the cold workability was low.

As to each of a test number 16 and a test number 22, the working rate Z was excessively low. As a result, the tensile strength was more than 700 MPa, and the cold workability was low.

As to each of a test number 17 and a test number 23, the finishing temperature T3 was excessively high. As a result, the tensile strength was more than 700 MPa, and the cold workability was low.

As to each of a test number 18 and a test number 24, the cooling rate was excessively low. As a result, the matrix structure included bainite, which made the tensile strength more than 700 MPa. Consequently, the cold workability was low.

An embodiment of the present invention has been described above. However, the foregoing embodiment is merely an example for implementing the present invention. Accordingly, the present invention is not limited to the above embodiment, and the above embodiment can be appropriately modified within a range that does not deviate from the gist of the present invention.

**Claims**

1. A rolled rod for cold-forged thermally refined articles comprising a chemical composition consisting of, in mass%:

   C: 0.22 to 0.40%,
   Si: 0.35 to 1.5%,
   Mn: 0.20 to 0.40%,
   P: less than 0.020%,
   S: less than 0.015%,
   Cr: 0.70 to 1.45%,
   Al: 0.005 to 0.060%,
   Ti: 0.01 to 0.05%,
   B: 0.0003 to 0.0040%,
   N: 0.0020 to 0.0080%,
   O: 0.0020% or less,
   Cu: 0 to 0.50%,
   Ni: 0 to 0.30%,
   Mo: 0 to 0.05%,
   V: 0 to 0.05%, and
   Nb: 0 to 0.05, with the balance being Fe and impurities, and that satisfies Formula (1) and Formula (2),
   wherein, in a matrix structure, a total area fraction of pro-eutectoid ferrite and pearlite is 90% or more, and an area fraction of the pro-eutectoid ferrite is 30% or more, and
   the rolled rod has a tensile strength of 700 MPa or less,

$$0.50 \leq C + Si/10 + Mn/5 + 5Cr/22 \leq 0.85 \quad (1)$$

$$Si / Mn > 1.0 \qquad (2)$$

where a content (mass%) of a corresponding element is substituted for each symbol of an element in the formulae.

2. The rolled rod for cold-forged thermally refined articles according to claim 1, wherein the chemical composition contains one or more types selected from a group consisting of:

   Cu: 0.02 to 0.50%;
   Ni: 0.01 to 0.30%;
   Mo: 0.005 to 0.05%; and
   V: 0.005 to 0.05%.

3. The rolled rod for cold-forged thermally refined articles according to claim 1 or claim 2, wherein the chemical composition contains:
   Nb: 0.0015 to 0.05%.

4. A method for producing a rolled rod for cold-forged thermally refined articles, the method comprising:

   a billeting process of heating a starting material having the chemical composition according to any one of claim 1 to claim 3 to a temperature of 1200°C or more and thereafter subjecting the starting material to billeting, so as to produce a billet; and
   a finish rolling process of heating the billet to a temperature of 1050°C or less and thereafter subjecting the billet to finish rolling, so as to produce a rolled rod, wherein
   the finish rolling process includes:

   a process of subjecting the billet to the finish rolling to produce the rolled rod at a working rate Z defined by Formula (3) set at 5 to 15 /sec within a range of a surface temperature of the billet of 750 to 850°C; and
   a process of cooling the rolled rod, immediately after completion of the rolling, at a cooling rate of 0.2 to 5.0°C/sec down to 500°C,

$$Z = -\ln(1 - R) / t \qquad (3)$$

   where "R" in Formula (3) denotes a reduction of area (%) of the finish rolling and is defined by Formula (4), and "t" denotes a finish rolling duration (sec),

$$R = (A_0 - A) / A_0 \qquad (4)$$

   where "$A_0$" in Formula (4) denotes a cross-sectional area (mm$^2$) of the billet before the finish rolling, and "A" denotes a cross-sectional area (mm$^2$) of the rolled rod after the finish rolling.

FIG. 1

R24　　φ8　　　　　　　　φ15

42

106

FIG. 2

60°

0.175R

φ7　　　　　φ4.2

13　　　　　27　　　　　20　　　　10

## INTERNATIONAL SEARCH REPORT

| International application No. |
|---|
| PCT/JP2016/085854 |

| A. CLASSIFICATION OF SUBJECT MATTER |
|---|
| *C22C38/00*(2006.01)i, *C22C38/54*(2006.01)i, *F16B35/00*(2006.01)i, *C21D8/06* (2006.01)n, *C21D9/00*(2006.01)n |

According to International Patent Classification (IPC) or to both national classification and IPC

| B. FIELDS SEARCHED |
|---|
| Minimum documentation searched (classification system followed by classification symbols) |
| C22C38/00-38/60, C21D8/00-8/10, F16B35/00, C21D8/06, C21D9/00 |

| Documentation searched other than minimum documentation to the extent that such documents are included in the fields searched |
|---|
| Jitsuyo Shinan Koho 1922-1996 Jitsuyo Shinan Toroku Koho 1996-2017<br>Kokai Jitsuyo Shinan Koho 1971-2017 Toroku Jitsuyo Shinan Koho 1994-2017 |

| Electronic data base consulted during the international search (name of data base and, where practicable, search terms used) |
|---|
| |

| C. DOCUMENTS CONSIDERED TO BE RELEVANT |
|---|

| Category* | Citation of document, with indication, where appropriate, of the relevant passages | Relevant to claim No. |
|---|---|---|
| A | JP 2009-527638 A (Posco),<br>30 July 2009 (30.07.2009),<br>& WO 2007/074986 A1 & KR 10-2007-0068511 A<br>& CN 101365819 A | 1-4 |
| A | JP 2015-189987 A (Kobe Steel, Ltd.),<br>02 November 2015 (02.11.2015),<br>& WO 2015/146837 A1 & TW 201606096 A | 1-4 |
| A | JP 2012-237052 A (JFE Steel Corp.),<br>06 December 2012 (06.12.2012),<br>(Family: none) | 1-4 |
| A | JP 2014-148739 A (Kobe Steel, Ltd.),<br>21 August 2014 (21.08.2014),<br>& US 2015/0329932 A1 | 1-4 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>14 February 2017 (14.02.17) | Date of mailing of the international search report<br>07 March 2017 (07.03.17) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**INTERNATIONAL SEARCH REPORT**

| International application No. |
|---|
| PCT/JP2016/085854 |

C (Continuation).     DOCUMENTS CONSIDERED TO BE RELEVANT

| Category* | Citation of document, with indication, where appropriate, of the relevant passages | Relevant to claim No. |
|---|---|---|
| A | JP 2013-227602 A  (Kobe Steel, Ltd.), 07 November 2013 (07.11.2013), & US 2015/0041029 A1     & EP 2843070 A1 | 1-4 |
| A | JP 2010-196094 A  (Aichi Steel Works Ltd.), 09 September 2010 (09.09.2010), (Family: none) | 1-4 |
| A | JP 2007-277705 A  (Kobe Steel, Ltd.), 25 October 2007 (25.10.2007), & US 2009/0047169 A1     & EP 2000553 A1 | 1-4 |
| A | JP 2006-307272 A  (Kobe Steel, Ltd.), 09 November 2006 (09.11.2006), (Family: none) | 1-4 |
| A | JP 11-029842 A  (Sumitomo Metal Industries, Ltd.), 02 February 1999 (02.02.1999), (Family: none) | 1-4 |
| A | JP 9-194999 A  (Sumitomo Metal Industries, Ltd.), 29 July 1997 (29.07.1997), (Family: none) | 1-4 |
| P,X | WO 2016/080308 A1  (Nippon Steel & Sumitomo Metal Corp.), 26 May 2016 (26.05.2016), descriptions in steel No.7 & TW 201632640 A | 1,4 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012162798 A
- JP 9104945 A
- JP 2013227602 A
- JP 2001234277 A

**Non-patent literature cited in the description**

- Elements of Metallurgy and Engineering Alloys. Materials Park. ASM International, 2008, 185-191